# EUROPEAN PATENT APPLICATION

(11) **EP 4 439 012 A1**
(43) Date of publication of application: **02.10.2024**
(21) Application number: 23164999.7
(22) Date of filing: 29.03.2023
(51) Int. Cl.: G01C 21/00, B60W 60/00

(54) **OPERATIONAL DESIGN DOMAIN MANAGEMENT FOR VEHICLES HAVING AUTOMATED DRIVING SYSTEMS**

(71) Applicant: Zenseact AB, 417 56 Gothenburg (SE)
(72) Inventor: FU, Junsheng, 449 35 Nödinge (SE); STENBORG, Erik, 417 41 Göteborg (SE); GARCIA JAIME, Gabriel, 417 58 Göteborg (SE)
(74) Representative: Zacco Sweden AB

(57) **Abstract**

Computer-implemented methods and related aspects for updating HD maps in view of real-world changes and for managing the ODD of the ADS accordingly are disclosed. A fleet of vehicles are used to automatically detect mismatches between the ADS's perceived environment (i.e. the perception data or sensor data) and the HD map, when they occur. Once a sufficient number of production vehicles have reported a mismatch event - i.e., an instance of a mismatch between the perceived environment and the HD map - or once a sufficient number of mismatch events have been reported to a remote server for a specific geographical location or area of interest, the remote server transmits a confirmation of the "mismatch" associated with that specific geographical location or area of interest to the fleet of vehicles associated with the remote server. Thereby the vehicles may configure an ODD exit for the ADS at that specific geographical location or area of interest - i.e., the ADS is configured to treat that specific geographical location or area of interest as a location or area that is outside of the ADS's ODD.

## Description

### TECHNICAL FIELD

The disclosed technology relates to the field of Operational Design Domain (ODD) management and digital maps for vehicles equipped with an Automated Driving System (ADS). In particular, but not exclusively the disclosed technology relates to the management of ODD exits in view of detected mismatches between sensory data and High Definition (HD) map data.

### BACKGROUND

During the last few years, the research and development activities related to autonomous vehicles have exploded in number and many different approaches are being explored. An increasing portion of modern vehicles have advanced driver-assistance systems (ADAS) to increase vehicle safety and more generally road safety. ADAS - which for instance may be represented by adaptive cruise control, collision avoidance system, forward collision warning, etc. - are electronic systems that may aid a vehicle driver while driving. Today, there is ongoing research and development within a number of technical areas associated to both the ADAS and the Autonomous Driving (AD) field. ADAS and AD will herein be referred to under the common term Automated Driving System (ADS) corresponding to all of the different levels of automation as for example defined by the SAE J3016 levels (1 - 5) of driving automation, and in particular for levels 3, 4 and 5.

Traditionally, maps are mainly designed for human use. More specifically, they are intended to be used for turn-by-turn navigation purposes. Other environmental information, such as the type and location of lane markers, any debris lying on the road and road maintenance obstructions, is visually obtained by the driver as he/she navigates through the roads. Autonomous vehicles, however, require very different maps. More specifically, these maps need to be in High Definition (HD), so-called HD Maps, that together with sensor fusion and perception algorithms can provide the vehicles with very precise localization and the possibility to better perceive the environment surrounding the vehicle.

HD map-based localization refers to the estimation of the position of the ego-vehicle (may also be referred to as host vehicle) in a given HD map by associating sensory measurements with the corresponding HD map elements or features. It is therefore important that the map elements that construct the HD maps accurately reflect the real-world environment since the HD maps are used as a reference to the localization of the vehicle and ADS's road model estimation. In other words, to ensure that the ADS can safely manoeuvre the vehicle on the road, it is important that the HD maps are timely updated with permanent and temporary changes of the road infrastructure.

### SUMMARY

The herein disclosed technology seeks to mitigate, alleviate or eliminate one or more of the deficiencies and disadvantages in the prior art to address various problems relating to degraded performance of Automated Driving Systems (ADSs) caused by outdated HD maps.

In particular, some embodiments seek to improve the management of the Operational Design Domain (ODD) of ADS-equipped vehicles.

Various aspects and embodiments of the disclosed technology are defined below and in the accompanying independent and dependent claims.

A first aspect of the disclosed technology comprises a computer-implemented method for a vehicle comprising one or more sensors for monitoring a surrounding environment of the vehicle and an Automated Driving System (ADS) configured to operate within an Operational Design Domain (ODD). The method comprises in response to detecting a mismatch between one or more road features derived from sensor data and the corresponding one or more road features derived from a High Definition (HD) map at a geographical location, transmitting data indicative of the detected mismatch to one or more remote servers. Further, in response to receiving data indicative of a confirmation of the detected mismatch from one or more remote servers, the method comprises configuring an ODD exit location for the ODD for the geographical location associated with the detected mismatch. The method further comprises receiving, from one or more remote servers, data comprising a temporary map layer/patch of the HD map defining a temporary update in the HD map of the geographical location associated with the detected mismatch. Moreover, the method comprises updating the configured ODD exit location for the ODD, and using the received temporary map layer/patch in order to localize the vehicle and/or to generate a road model for controlling the vehicle when the vehicle is located at the geographical location associated with the received temporary map layer/patch.

A second aspect of the disclosed technology comprises a computer program product comprising instructions which, when the program is executed by a computing device of a vehicle, causes the computing device to carry out the method according to any one of the embodiments of the first aspect disclosed herein. With this aspect of the disclosed technology, similar advantages and preferred features are present as in the other aspects.

A third aspect of the disclosed technology comprises a (non-transitory) computer-readable storage medium comprising instructions which, when executed by a computing device of a vehicle, causes the computing device to carry out the method according to any one of the embodiments of the first aspect disclosed herein. With this aspect of the disclosed technology, similar advantages and preferred features are present as in the other aspects.

The term "non-transitory," as used herein, is intended to describe a computer-readable storage medium (or *"*memory*"*) excluding propagating electromagnetic signals, but are not intended to otherwise limit the type of physical computer-readable storage device that is encompassed by the phrase computer-readable medium or memory. For instance, the terms "non-transitory computer readable medium" or *"*tangible memory*"* are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term *"*non-transitory*"*, as used herein, is a limitation of the medium itself (i.e., tangible, not a signal) as opposed to a limitation on data storage persistency (e.g., RAM vs. ROM).

A fourth aspect of the disclosed technology comprises an apparatus for a vehicle comprising one or more sensors for monitoring a surrounding environment of the vehicle. The vehicle comprises an Automated Driving System (ADS) configured to operate within an Operational Design Domain (ODD) the apparatus comprising one or more processors. The one or more processors are configured to in response to detecting a mismatch between one or more road features derived from sensor data and the corresponding one or more road features derived from a High Definition, HD, map at a geographical location, transmit data indicative of the detected mismatch to one or more remote servers. The one or more processors are further configured to in response to receiving data indicative of a confirmation of the detected mismatch from one or more remote servers, configure an ODD exit location for the ODD based on the geographical location associated with the detected mismatch. Moreover, the one or more processors are configured to receive, from one or more remote servers, data comprising a temporary map layer/patch of the HD map defining a temporary update in the HD map of the geographical location associated with the detected mismatch. The one or more processors are further configured to update the configured ODD exit location for the ODD, and use the received temporary map layer/patch in order to localize the vehicle or to generate a road model for controlling the vehicle when the vehicle is located in the geographical location associated with the received temporary map layer/patch. With this aspect of the disclosed technology, similar advantages and preferred features are present as in the other aspects.

A fifth aspect of the disclosed technology comprises a vehicle comprising one or more sensors for monitoring a surrounding environment of the vehicle, an Automated Driving System (ADS) configured to operate within an Operational Design Domain (ODD), and an apparatus according to any one of the embodiments disclosed herein. With this aspect of the disclosed technology, similar advantages and preferred features are present as in the other aspects.

A sixth aspect of the disclosed technology comprises a computer-implemented method for a server apparatus in communication with a plurality of vehicles, each vehicle comprising one or more sensors for monitoring a surrounding environment of the vehicle and an Automated Driving System (ADS) configured to operate within an Operational Design Domain (ODD). The method comprises receiving data from a first set of vehicles of the plurality of vehicles, the received data being indicative of a detected mismatch between one or more road features derived from sensor data and the corresponding one or more road features derived from a High Definition (HD) map at a geographical location. Further, in response to the received data satisfying one or more trigger conditions, the method comprises transmitting, to the plurality of vehicles, data indicative of an ODD exit location for the ODD at the geographical location associated with the detected mismatches, and transmitting, to the plurality of vehicles, a request for probe data associated with the geographical location associated with the detected mismatch. Moreover, the method comprises receiving probe data comprising perception data comprising information about the environment associated with the geographical location, obtaining a temporary map layer/patch of the HD map defining a temporary update in the HD map of the geographical location associated with the detected mismatches based on the received probe data, and transmitting, to the plurality of vehicles, the obtained temporary map layer/patch of the HD map. With this aspect of the disclosed technology, similar advantages and preferred features are present as in the other aspects.

In some embodiments, the computer-implemented method further comprises in response to receiving a confirmation of receipt of the generated obtained temporary map layer from a first vehicle of the plurality of vehicles, transmitting, to the first vehicle, data indicative of an update of the ODD exit location.

In some embodiments, the computer-implemented method further comprises in response to receiving, from a second set of vehicles of the plurality of vehicles, data comprising information about.
- a detected mismatch between one or more road features derived from sensor data and the corresponding one or more road features derived from the temporary map layer/patch for the geographical location, and/or
- a detected match between the one or more road features derived from sensor data and the corresponding one or more road features derived from a prior version of the HD map for the geographical location.

The computer-implemented method may further comprise, in response to the data received from the second set of vehicles satisfying one or more trigger conditions, transmitting, to the plurality of vehicles, data indicative of an instruction to discard the temporary map layer/patch and to use the prior version of the HD map for the geographical location.

In accordance with some embodiments, the computer-implemented further comprises transmitting, to one or more remote servers (of a map providing entity), data indicative of an outdated area of the HD map based on the received data being indicative of the detected mismatch. The method may further comprise receiving, from the one or more remote servers, an updated HD map version, transmitting, to the plurality of vehicles, the updated HD map version, and transmitting, to the plurality of vehicles, data indicative of an instruction to discard the temporary map layer/patch.

A seventh aspect of the disclosed technology comprises a computer program product comprising instructions which, when the program is executed by a computing device of a vehicle, causes the computing device to carry out the method according to any one of the embodiments of the sixth aspect disclosed herein. With this aspect of the disclosed technology, similar advantages and preferred features are present as in the other aspects.

An eighth aspect of the disclosed technology comprises a (non-transitory) computer-readable storage medium comprising instructions which, when executed by a computing device of a vehicle, causes the computing device to carry out the method according to any one of the embodiments of the sixth aspect disclosed herein. With this aspect of the disclosed technology, similar advantages and preferred features are present as in the other aspects.

A ninth aspect of the disclosed technology comprises a system for a server apparatus in communication with a plurality of vehicles, each vehicle comprising one or more sensors for monitoring a surrounding environment of the vehicle, an Automated Driving System (ADS) configured to operate within an Operational Design Domain (ODD). The system comprises control circuitry configured to receive data from a first set of vehicles of the plurality of vehicles, the received data being indicative of a detected mismatch between one or more road features derived from sensor data and the corresponding one or more road features derived from a High Definition (HD) map at a geographical location. Further, in response to the received data satisfying one or more trigger conditions, the control circuitry is further configured to transmit, to the plurality of vehicles, data indicative of an ODD exit location for the ODD for the geographical location associated with the detected mismatches, and to transmit, to the plurality of vehicles, a request for probe data associated with the geographical location associated with the detected mismatch. The control circuitry is further configured to receive probe data comprising perception data comprising information about the environment associated with the geographical location, obtain a temporary map layer/patch of the HD map defining a temporary update in the HD map of the geographical location associated with the detected mismatches based on the received probe data, and transmit, to the plurality of vehicles, the obtained temporary map layer/patch of the HD map. With this aspect of the disclosed technology, similar advantages and preferred features are present as in the other aspects.

A tenth aspect of the disclosed technology comprises a server comprising the system according to any one of the embodiments of the ninth aspect disclosed herein. With this aspect of the disclosed technology, similar advantages and preferred features are present as in the other aspects.

An eleventh aspect of the disclosed technology comprises a cloud environment comprising one or more remote servers according to any one of the embodiments of the tenth aspect disclosed herein. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that a more dynamic and efficient ODD management scheme is achievable.

An advantage of some embodiments is that errors in the HD map are detected, verified and resolved in a more expedient manner, which may increase the general availability of the ADS, improve the general performance of the ADS, and improve the safety of the ADS.

An advantage of some embodiments is that the more dynamic road model estimation functions and localization functions for the ADS are enabled, which can account for inaccuracies in the HD map in a potentially more efficient and timely manner.

An advantage of some embodiments is that the integrity or consistency of road model estimation functions and localization functions for the ADS may be improved.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Fig. 1 is a schematic signalling diagram representation of a method for supporting localization functions and/or road model estimation functions of a plurality of vehicles in accordance with some embodiments.
Fig. 2 is a schematic flowchart representation of a method for ODD management, suitably performed by one or more processors of a vehicle, in accordance with some embodiments.
Fig. 3 is a schematic flowchart representation of a method for ODD management, suitably performed by one or more processors of a vehicle, in accordance with some embodiments.
Fig. 4 is a schematic flowchart representation of a method for ODD management, suitably performed by one or more processors of a vehicle, in accordance with some embodiments.
Fig. 5 is a schematic flowchart representation of a method for supporting localization functions and/or road model estimation functions of a plurality of vehicles, suitably performed by one or more processors of a remote server, in accordance with some embodiments.
Fig. 6 is a schematic block diagram of a vehicle comprising an apparatus for ODD management in accordance with some embodiments.
Fig. 7 is a schematic block diagram representation of a vehicle comprising an apparatus for ODD management and a system for supporting localization functions and/or road model estimation functions of a plurality of vehicles in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first signal could be termed a second signal, and, similarly, a second signal could be termed a first signal, without departing from the scope of the embodiments. The first signal and the second signal are both signals, but they are not the same signal.

### Overview

As mentioned above, to enable autonomous driving an ADS generally requires centimetre-level accuracy for localization, therefore the HD map may be considered an important component for the map-based localization and road model estimation algorithms of the ADS. Moreover, it is important to ensure that the map elements that constitute the HD map reflect the real-world in an accurate manner as they are used by the ADS for localizing the vehicle in the real-world and for generating road model estimations, which in turn are used as input from decision-making and manoeuvring the vehicle. In other words, having up-to-date HD maps that accurately and reliably reflect the real-world are important for ensuring that the ADS is operating within its designed and verified Operational Design Domain (ODD). Ensuring that the vehicle is operating within its ODD serves to confirm that the ADS is able to operate with high performance and with low risk.

HD maps can become outdated for several reasons such as e.g., road works, worn out lanes or lane markers, accidents, and even weather conditions. However, keeping the map up-to-date is not a trivial task, and it is a problem that is addressed by the herein disclosed technology. Conventionally, map providing entities require collections of sensor data, and oftentimes the sensor data needs to be collected by dedicated vehicles (specialized survey vehicles) equipped with expensive and specialized sensors, which renders the process of keeping the HD map up-to-date not only very costly, but also relatively slow.

An example situation with an outdated HD map may for example occur when an on-ramp on a highway is re-routed and subsequently removed from that specific part of the highway. In such situations, it will conventionally take a relatively long time before this change is reflected in the HD map, i.e. until the HD map has been updated appropriately. This will inevitably cause difficulties for the map-based localization and road model estimation algorithms of the ADS for the relatively long period of time until the HD map has been updated. More specifically, such situations will cause a mismatch between the elements derived from sensor data (i.e. what the ADS or "vehicle" perceives) and the map elements of the HD map, which will unavoidably lead to errors in the map-based localization and road model estimation algorithms of the ADS. This will either impose a safety risk for the vehicle's occupants, or more likely, render the ADS unavailable for a long duration of time (until the HD map has been updated) at those locations, impairing the user-experience.

Therefore, the herein disclosed technology addresses the shortcomings of currently known technologies for updating HD maps in view of real-world changes and for managing the ODD of the ADS accordingly. In some embodiments, a fleet of "production vehicles" (i.e. not specialized survey vehicles) are used to automatically detect mismatches between the ADS's perceived environment (i.e. the perception data or sensor data) and the HD map, when they occur. Once a sufficient number of production vehicles have reported a "mismatch event" (i.e. an instance of a mismatch between the perceived environment and the HD map) or once a sufficient number of mismatch events have been reported to a central server for a specific geographical location or area of interest, the central server broadcasts or otherwise transmits a confirmation of the "mismatch" associated with that specific geographical location or area of interest to the fleet of production vehicles associated with the central server. Thereby the fleet of vehicles may configure or add an ODD exit for the ADS at that specific geographical location or area of interest, meaning that the ADS is configured to treat that specific geographical location or area of interest as a location or area that is outside of the ADS's ODD.

Further, the central server may request for "probe data" associated with that specific geographical location or area of interest (i.e. perception data collected by the vehicles while traveling through that specific geographical location or area of interest). Alternatively, the ADS of the vehicles may be configured to automatically transmit the probe data upon receiving the confirmation of the mismatch event and once they have travelled through that specific geographical location or area of interest. The central server may then be configured to construct or otherwise obtain a *"*temporary*"* HD map layer or patch, which forms a corrected segment of the HD map for that specific geographical location or area of interest based on aggregated probe data collected at that specific geographical location or area of interest. Once the *"*temporary*"* HD map layer has been constructed, it is broadcasted or otherwise transmitted to the fleet of vehicles. The ADS of each vehicle in the fleet may then accordingly update the previously configured ODD exit, e.g. by removing the ODD exit and thereby no longer treats that specific geographical location or area of interest as a location or area that is outside of the ADS's ODD. Moreover, the ADS of each vehicle in the fleet may then use the received *"*temporary*"* HD map layer as input to various control, localization, or road modelling algorithms of the ADS. For example, the ADS of each vehicle in the fleet may then use the received *"*temporary*"* HD map layer as input for the map-based localization and road model estimation algorithms of the ADS when traveling through that specific geographical location or area of interest.

Moreover, in some embodiments, once a regular HD map update is available (e.g. from a HD map providing entity), which accurately considers or reflects the changes that caused mismatch event at that specific geographical location or area of interest, the updated HD map is distributed to the fleet of vehicles, which may then discard the *"*temporary*"* HD map layer or patch and rely on the updated HD map instead.

### Definitions

The term "Automated Driving System" or "ADS" is in the present context to be understood as hardware and software that are collectively capable of performing at least parts of the Dynamic Driving Task (DDT) of a vehicle on a sustained basis. Accordingly, ADS technology includes a combination of hardware and software components, such as e.g., sensors (e.g., cameras, radar, and lidar) and algorithms (e.g. sensor fusion algorithms and machine learning algorithms), that work together to perceive the surrounding environment, make decisions, and control the vehicle's movement. Accordingly, the term ADS may in the present context be understood as an Advanced Driver Assistance System (ADAS) or an Autonomous Driving (AD) system.

The surrounding environment of a vehicle can be understood as a general area around the vehicle in which objects (such as other vehicles, landmarks, obstacles, etc.) can be detected and identified by vehicle sensors (radar, LIDAR, cameras, etc.), i.e. within a sensor range of the ego-vehicle.

The "Dynamic Driving Task" (DDT) is a term used in the context of Automated Driving Systems or Autonomous Driving to refer to the complex set of activities and decisions that a human driver typically engages in while operating a vehicle in a changing environment. The DDT includes a wide range of tasks, such as monitoring the road and other vehicles, anticipating and reacting to hazards, adjusting speed and direction based on changing conditions, communicating with other drivers, and navigating to a destination. It involves not only the physical act of driving, but also cognitive and perceptual processes such as attention, memory, decision-making, and situational awareness.

An "Operational Design Domain" (ODD) is to be understood as a description of the specific operating conditions in which an Automated Driving System (ADS) or a feature thereof is designed to properly operate or function, including, but not limited to, roadway characteristics (e.g., presence of visible lane markers, presence of roadway barriers, etc.), speed range, environmental conditions (weather, daytime/night time, etc.), prevailing traffic law and regulations, the requisite presence or absence of certain traffic characteristics, and/or availability of certain data types (e.g., HD map data, camera output, radar output). That is, the ODD may define one or more specific environmental scenarios and the ADS may be configured to only operate within an environment fulfilling the conditions/parameters of those specific environmental scenarios. The conditions/parameters may for example be obtained from HD map data, sensor data output from one or more vehicle-mounted sensors, communication data obtained from a remote server, and/or communication data obtained from another vehicle via a Vehicle-to-Vehicle (V2V) communication protocol. The conditions/parameters may accordingly comprise availability of certain data (e.g. availability of HD map data), correlation between data originating different data sources (i.e., that the perceived environment matches information derived from HD map), roadway characteristics (e.g., presence of visible lane markers, presence of roadway barriers, etc.), speed range, environmental conditions (weather, daytime/night time, etc.), prevailing traffic law and regulations, and/or the requisite presence or absence of certain traffic characteristics.

Thus, an "ODD exit location" may be understood as a geographical location or map location that indicates an entry into an area that is outside of the ADS's ODD, or analogously a geographical location or map location that indicates an exit from an area that is within the ADS's ODD. For example, an ODD for the ADS may be defined as a controlled access highway without any on-ramps or off-ramps and road barriers on both sides of the road. Then a road segment of such a controlled-access highway where there is a disruption of the road barriers would comprise an ODD exit at the point of entry into that particular road segment (without road barriers). Analogously, assuming that the disruption of the road barrier was of limited length (e.g. 100m), the road segment may also comprise an ODD entry at the point of exit from that particular road segment (without road barriers). A geographical location may comprise an area or a specific point-location depending on the context.

A "High-Definition map" ("HD map") may be understood as a digital representation of a geographic area that provides highly accurate and detailed information about the environment, including the layout of roads, buildings, and other infrastructure, as well as features such as traffic signals, lane markings, and road signs. Unlike traditional maps, which are primarily used for navigation, HD maps are designed specifically to support the operation of autonomous vehicles, providing the detailed information that is required for safe and efficient self-driving. HD maps typically include precise location data, such as Global Navigation Satellite System (GNSS) coordinates, as well as information about the height and shape of objects in the environment, which is used to create a 3D model of the surroundings. They can be created through a combination of aerial and ground-based surveying techniques, as well as sensor fusion algorithms and/or machine learning algorithms that analyse sensor data collected from vehicles that have already travelled through the area. HD maps are a critical component of autonomous driving technology, as they enable vehicles to accurately navigate their environment, even in complex and dynamic traffic situations.

The term *"*temporary*"* with respect to the "temporary HD map layer" or "temporary HD map patch" is in the present context used to differentiate between conventional layers of patches of the full HD map or from conventional HD map layers or patches. More specifically, the term *"*temporary*"* indicates that the HD map layer, which is a crowdsourced HD map layer from production vehicles, is intended for temporary use (i.e. for a limited duration of time) until a conventional or regular HD map update is available to be distributed to the fleet of vehicles. In other words, the *"*temporary*"* map layer or patch serves as an intermediate or temporary fix of outdated areas or segments of the HD map so that the ADS can be provided with the ability to still operate safely and reliably within such outdated areas or segments in a timelier manner.

The term "HD Map-based localization" may be understood as a process used by ADSs to accurately determine a vehicle's position on the road using HD Maps. In HD Map-based localization, the vehicle's sensors, such as cameras and lidar, are used to detect elements in the environment, such as buildings, signs, and road markings. These elements are then matched to the corresponding map elements on the HD map, allowing the vehicle to accurately determine its position on the road. This process can be used in conjunction with other localization methods, such as GNSS and inertial measurement units (IMUs), to provide even greater accuracy and redundancy. HD Map-based localization may be understood as an ADS function that allows the ADS to navigate complex and dynamic environments with a high degree of accuracy and safety. It is particularly useful in situations where other localization methods, such as GPS, may be less reliable or accurate, such as in urban environments with tall buildings or tunnels.

The term "road model generation" or "road model estimation" may be understood as a process used by ADSs to create a model of the road environment based on sensor data and HD map data. The road model includes information about the road surface, such as its geometry, curvature, and slope, as well as any static obstacles that may be present. In more detail, a road model may refer to the geometric representation, including statistical uncertainty estimations for the host lane and the adjacent lane. Thus, a road model may comprise one or more lanes, and each lane may be represented as a lane centre with lane boundaries together with their corresponding uncertainties. Furthermore, a road model may include additional information about the lane boundaries, such as e.g., their type (e.g. lane marker, road edge, road barrier, cones, etc.). The road model can be used for a variety of purposes in an ADS context, such as to aid in localization, path planning, and obstacle detection and avoidance. For example, the road model can be used to predict the path of the vehicle based on the road curvature and slope, and to identify potential obstacles that the vehicle may encounter. Accurate road model estimation is critical for safe and reliable ADSs, as it allows the vehicle to make informed decisions and take appropriate actions in a complex and dynamic driving environment. Road model estimation is typically performed using a combination of HD Map data and sensory output, such as camera output, lidar output, and radar output, which are used to collect data about the road environment. The data is then processed and analysed using algorithms to create a detailed 3D map of the road surface and surrounding environment.

In general, "road model generation" or "road model estimation" has two separate tracks. Map-based Road Estimation (MRE) and Perceived Road Estimation (PRE). The MRE may be understood as a process for estimating a road model by first using HD map based localization to localize the ego-vehicle in the HD map, and then extracts the road model based on the ego-vehicle pose and the map elements of the HD map. The PRE, on the other hand, may be understood as a process for estimating a road model without using the HD map and instead relying on real-time sensor measurements (e.g., camera output, lidar output, and radar output). The output from both of these road model estimation processes may be fused using a road geometry fusion (RGF) algorithm. The resulting fused road model may then be used as the final estimated road model.

The term "perception data" refers to the information gathered by sensors and other technologies that are used by ADS-equipped vehicles to detect and interpret their environment. This includes data collected from cameras, lidar, radar, and other sensors that help the vehicle "perceive" its surroundings and make decisions based on that information. The perception data collected by the vehicle may include the position, speed, and direction of nearby objects, position and type of road markings, position and type of traffic signs, and other relevant information. This data may then be processed by the vehicle's onboard computer to help it make decisions on steering, acceleration, braking, and other actions necessary to safely navigate the environment. Accordingly, the term "perception" data may refer to "surroundings assessment" data, "spatial perception" data, *"*processed sensory*"* data and/or "temporal dependencies" data, whereas perception "data" may refer to perception "information" and/or "estimates". The term "obtained" from a perception module, on the other hand, may refer to "derived" from a perception model and/or "based on output data" from a perception module or system, whereas perception module/system configured to "generate the set of perception data" may refer to perception module/system adapted and/or configured to "estimate the surroundings of said vehicle", "estimate at least a portion of surroundings of said vehicle", "determine surroundings of said vehicle", "interpret sensory information relevant for the autonomous manoeuvring of said vehicle", and/or "estimate surroundings of said vehicle and make model predictions of future states of the surroundings of said vehicle".

The term "object-level data" in reference to the perception data, may in the present context be understood as the output of the perception system that processes the feature-level data output from various sensors installed in a vehicle, such as cameras, lidars, and radars. The perception system may for example process the feature-level data to identify and track objects in the vehicle's surroundings, such as other vehicles, pedestrians, cyclists, and stationary objects. The object-level data provides a high-level understanding of the environment around the vehicle, including lane geometry, lane marker type, road edge geometry, road edge type, traffic sign location, and/or traffic sign type, and may further include the location, size, velocity, and trajectory of the detected objects. This information is used by the ADS to make safe and effective decisions, such as adjusting its speed, changing lanes, and avoiding collisions. The object-level data may be represented in various formats, such as line traces, bounding boxes, segmentation masks, or point clouds, depending on the perception system's implementation. Additionally, object-level data may be combined with other information, such as map data, traffic signs, and weather conditions, to provide a more comprehensive understanding of the driving environment. In summary, object-level data may be understood as the processed output of the perception system, and it provides the ADS with a high-level understanding of its surroundings to make safe and effective driving decisions.

### Example Embodiments

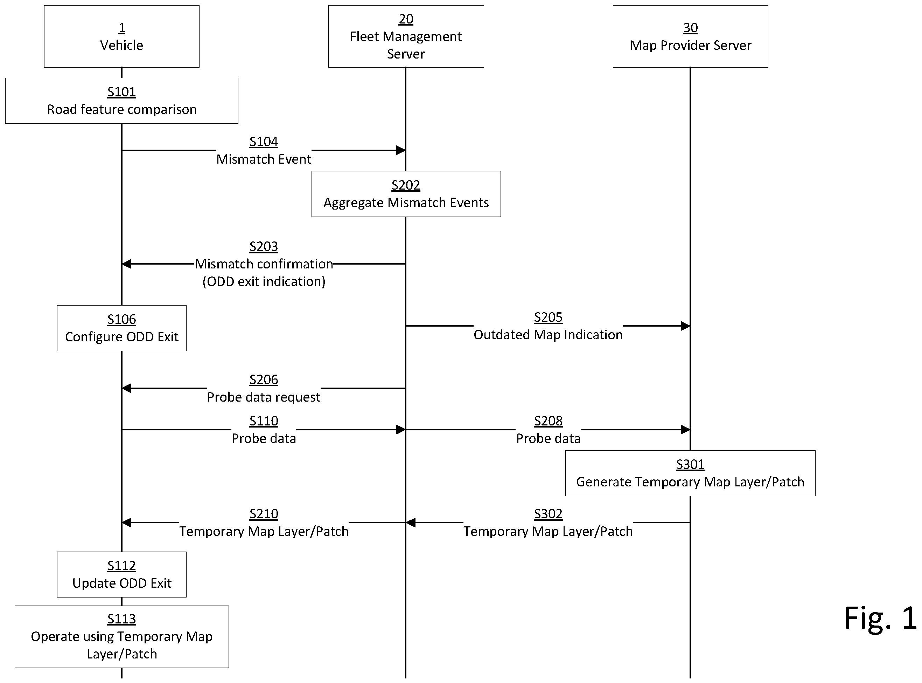

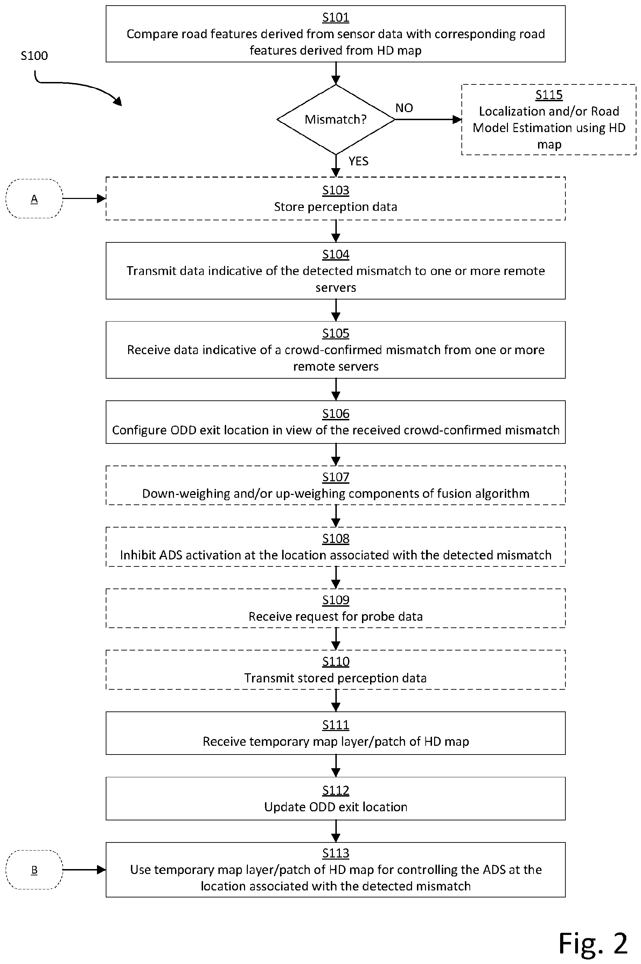

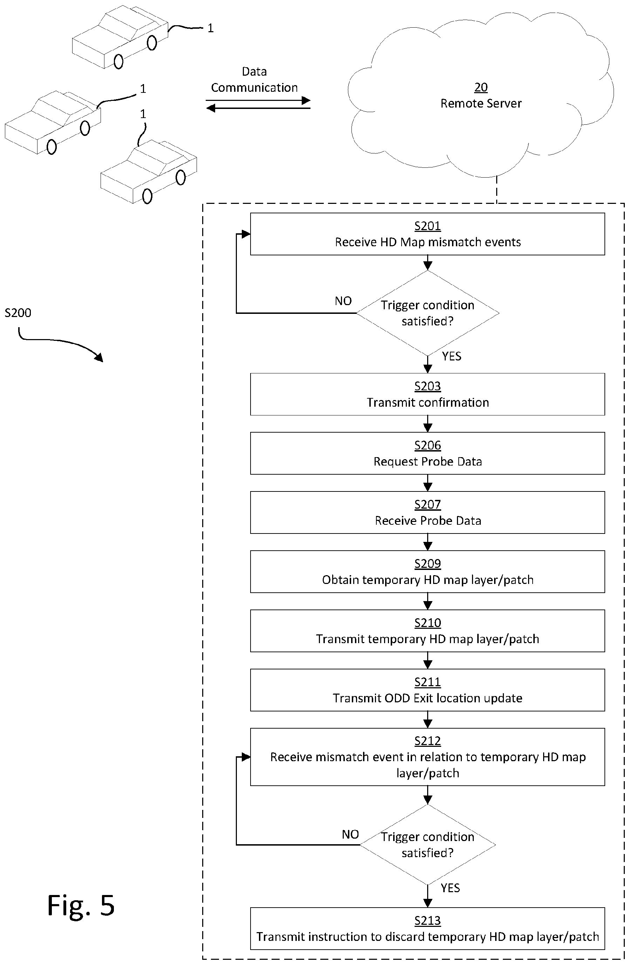

Fig. 1 is a schematic signalling chart representing processes executed at the "vehicle-side" and "server-side" as well as the information flow therebetween in accordance with some embodiments. Even though only one vehicle-node 1 is illustrated in Fig. 1, there may be multiple vehicles executing a corresponding method in communication with the fleet management server 20. Similarly, even though only one fleet management server-node 20 and only one map provider server-node 30 are illustrated in Fig. 1, the processes may be distributed across multiple servers in a so-called cloud environment. Furthermore, Figs. 2-4 are schematic flowchart representations of a "vehicle-side" method S100 in accordance with some embodiments, and Fig. 5 is a schematic flowchart representation of a "server-side" method S200 (i.e. from the perspective of the fleet management server 20 in Fig. 1) in accordance with some embodiments. The map provider server 30 may be understood as an independent entity in charge of constructing and maintaining HD maps using their own fleet of professional survey vehicles.

The vehicle-side method S100 is preferably a computer-implemented method S100, performed by a processing system of the ADS-equipped vehicle 1. Accordingly, the vehicle 1 comprises one or more sensors for monitoring the surrounding environment of the vehicle 1 and an ADS configured to operate within an ODD. The processing system may for example comprise one or more processors and one or more memories coupled to the one or more processors, wherein the one or more memories store one or more programs that perform the steps, services and functions of the method S100 disclosed herein when executed by the one or more processors.

Similarly, the server-side method S200 is preferably a computer-implemented method S200, performed by a processing system of one or more servers 20. The processing system may for example comprise one or more processors and one or more memories coupled to the one or more processors, wherein the one or more memories store one or more programs that perform the steps, services and functions of the method S200 disclosed herein when executed by the one or more processors.

Starting from the vehicle side, in accordance with some embodiments, the method S100 comprises comparing S101 road features/elements derived from sensor data with the corresponding road features/elements derived from HD map data. In some embodiments, the method S100 comprises comparing S101 object-level data associated with the road segment the vehicle 1 upon which the vehicle is traveling or has travelled derived from sensor data with the corresponding object-level data derived from the HD map data. In more detail, the method S100 may comprise comparing S101 lane geometry characteristics (e.g., geometry and/or location of lane boundaries, geometry and/or location of lane centre, type of lane boundaries, etc.) derived from sensor data with the corresponding lane characteristics derived from HD map data. Moreover, the method S100 comprises comparing road edge characteristics (e.g., type of road edge, geometry and/or location of road edge), traffic sign characteristics, road type characteristics, and so forth.

Further, in response to detecting a mismatch between one or more road features derived from sensor data and the corresponding one or more road features derived from a HD map at a geographical location, transmitting S104 data indicative of the detected mismatch to one or more remote servers 20. The data indicative of the detected mismatch may be referred to as a "mismatch event" in the following.

In the present context, when a signal or data is indicative of something, it should be construed as that the signal or data comprises information or evidence that suggests the presence or occurrence of that thing. In other words, the signal or data is a sign or an indication that something is likely to be true or present. Thus, a signal or data indicative of a mismatch does not necessarily have to directly comprise information of the mismatch, but may indirectly convey the information by for example pointing to another dataset, by having specific data format or signal format that is known by the receiver to indicate that a mismatch has been detected, and so forth. However, in some embodiments, "data indicative of" may correspond to "data comprising information about".

A "mismatch" between one or more road features derived from a first dataset (e.g. perception data) and the corresponding one or more road features derived from a second dataset (e.g. HD map data) may comprise a deviation in the presence or non-presence of the one or more road features, a deviation in the position of the one or more road features, a deviation in the geometry of the one or more road features, and/or a deviation in the type of the one or more road features. For example, the first dataset may define a presence of two lanes, while the second dataset may define a presence of three lanes, which would constitute a mismatch between the two datasets. Further, the first dataset may define a presence of a stop sign at position X, while the second dataset may not comprise any stop sign, which would constitute a mismatch between the two datasets. Still further, the first dataset may define a lane geometry with a lane centre and lane boundaries having a first geometry, while the second dataset may define a lane geometry with a lane centre having second geometry, different from the first, such that if the first and second lane geometries were overlaid in a common coordinate space they would not coincide, which could constitute a mismatch between the two datasets. Moreover, the "mismatch" may be indicated as a binary signal (e.g., 1 - mismatch present and 0 - mismatch not present), or as a probability value or confidence level (e.g. 0% mismatch - road features completely coincide/conform vs. 100% mismatch - road feature is present in one dataset and not the other dataset).

The aforementioned deviations may be conditional upon an error margin, so that only deviations exceeding the error margin are considered as "mismatches" and accordingly transmitted S104. In reference to the mismatch being represented by a probability value or confidence level, the error margin may be in the form of a threshold, e.g. only probability values above 10% are considered as "mismatches". However, in some embodiments, all "mismatches" are transmitted including a confidence value of the detected mismatch and/or a confidence value associated with the one or more road features derived from sensor data (i.e. a confidence of the "sensor observations"), and the task of evaluating the "mismatches" is moved to the one or more remote servers instead. Analogously, a "match" between one or more road features derived from a first dataset and the corresponding one or more road features derived from a second dataset may comprise a conformity or agreement in the presence or non-presence of the one or more road features, a conformity or agreement in the position of the one or more road features, a conformity or agreement in the geometry of the one or more road features, and/or a conformity or agreement in the type of the one or more road features. Same as before, the aforementioned conformities or agreements may be conditional upon an error margin, so that small deviations, i.e. within the error margin, are still considered as "matches".

In some embodiments, the transmitted data indicative of the detected mismatch further comprises meta data including one or more geographical coordinates of the geographical location, a time stamp of the detected mismatch, one or more vehicle state parameters (e.g. Inertial Measurement Unit (IMU) data, GNSS coordinates of the vehicle, speed of the vehicle, etc.), sensor calibration data, software version (e.g. ADS software version), HD map version, and/or one or more sensor snapshots of the surrounding environment at the geographical location.

Moreover, the data need not be transmitted directly to the fleet management server, but may be routed via one or more other servers depending on specific implementations and information security protocols. For example, there may be an intermediate server (not shown) responsible to communicate directly (via e.g. a wireless communication network) with the fleet of vehicles 1, and the information is conveyed to the fleet management server 20 (may also be referred to as ADS management server) via the intermediate server. This may for example be the case if the fleet management server 20 is not managed by the OEM, such that all communication to and from the vehicles have to be routed through one or more OEM-controlled servers.

Further, the method S100 may comprise storing S103 perception data comprising information about the environment associated with the geographical location. The perception data may be stored in an appropriate datastore comprising a volatile or non-volatile memory. The perception data may for example be stored in a data buffer having a buffer length in the range of 1 second to 300 seconds. The data buffer may be considered as a temporary storage of the perception data, whose contents may for example be discarded upon certain events occurring (e.g. when the vehicle is turned off) or at regular intervals. In some embodiments, the perception data is temporarily stored in the data buffer, and in response to detecting the mismatch between one or more road features derived from sensor data and the corresponding one or more road features derived from the HD map at a geographical location, the temporarily stored perception data is persisted in datastore. Thereby a better utilization of the vehicles data storage resources may be achieved as the perception data is only persisted if a potential later use is already predicted for the perception data, i.e. if a mismatch event is detected.

In some embodiments, the stored perception data comprises object-level data including lane geometry data, lane marker type data, road edge geometry data, road edge type data, traffic sign location data, and/or traffic sign type data.

The method S100 further comprises receiving S105 data indicative of a confirmation of the detected mismatch from one or more remote servers. As mentioned, the received S105 confirmation may be understood as a "crowd-confirmation" of the mismatch event, where the one or more remote servers have aggregated the reports of a mismatch event for a particular location and thereby confirmed the mismatch. Further, in response to receiving S105 data indicative of a confirmation of the detected mismatch from one or more remote servers, an ODD exit location for the ODD for the geographical location associated with the detected mismatch is configured S106. The configuring S106 of the ODD exit location may comprise adding an ODD exit location for the ODD at the geographical location associated with the detected mismatch. Accordingly, in some embodiments, the ODD comprises an HD map requirement condition. More specifically, the ODD may comprise a condition requiring that there are no mismatches (within some margin of error) between road features derived from sensor data and the corresponding road features derived from the HD map.

In some embodiments, the ADS is configured to generate a road model of a surrounding environment of the vehicle based on a fusion of an HD map-based road model and a perception-based road model. Accordingly, the method S100 may comprise down-weighing S107 the HD map-based road model of the fusion and/or up-weighing S107 the perception-based road model of the fusion for a generated road model of the surrounding environment at the geographical location, in response to detecting the mismatch between one or more road features derived from sensor data and the corresponding one or more road features derived from the HD map at the geographical location. In more detail, upon detecting a mismatch event the ADS may reduce the influence of the Map-based Road Estimation (MRE) and/or increase the influence Perceived Road Estimation (PRE) in the fused road model. Thereby the ADS can reduce any negative influence caused by an outdated or otherwise erroneous HD map.

However, in some embodiments, the down-weighing S107 and the up-weighing S108 may be performed in response to receiving S105 data indicative of a confirmation of the detected mismatch from one or more remote servers. In other words, the ADS may reduce the influence of the Map-based Road Estimation (MRE) and/or increase the influence Perceived Road Estimation (PRE) in the fused road model after the mismatch event has been confirmed.

Moreover, in some embodiments, the method S100 comprises inhibiting S108 ADS activation at the geographical location associated with the detected mismatch. In particular, the method S100 may comprise initiating and executing a handover procedure so to hand over control of the vehicle from the ADS to a driver of the vehicle, when the vehicle approaches the geographical location associated with the detected mismatch. The inhibition S108 of ADS activation at the geographical location may be performed in response to receiving S105 data indicative of a confirmation of the detected mismatch from one or more remote servers.

In some embodiments, the method S100 further comprises receiving S109, from one or more remote servers, a request to transmit probe data associated with the geographical location associated with the detected mismatch. In other words, the method S100 may comprise receiving S109, from one or more remote servers, a request to transmit probe data collected at the geographical location associated with the detected mismatch. Further, the method S100 may comprise, in response to receiving S109 the request to transmit probe data, transmitting S110 the stored S103 perception data to one or more remote servers. As before, the request to transmit probe data may be received S109 from one or more server while the stored S103 perception data may be transmitted S110 to one or more different servers, or the request may be received S109 from the same one or more server as the stored S103 perception data is transmitted to depending on a specific realization.

Further, the method S100 comprises receiving S111, from one or more remote servers, data comprising a temporary map layer or temporary map patch of the HD map defining a temporary update in the HD map of the geographical location associated with the detected mismatch. As before, the temporary map layer may be understood as a map layer generated from crowd-sourced data collected by production vehicles. Once the temporary map layer is received S100, the configured S106 ODD exit location is updated S112. In more detail, the updating S112 of the configured S106 ODD exit location may comprise removing the configured S106 location. In other words, now that the temporary map layer is available, the inaccuracies of the HD map are remedied, and the location associated with the detected mismatch no longer falls outside of the ODD.

The method further comprises using S113 the received S111 temporary map layer or temporary map patch in order to localize the vehicle and/or to generate a road model for controlling the vehicle when the vehicle is located at the geographical location associated with the received S111 temporary map layer or temporary map patch.

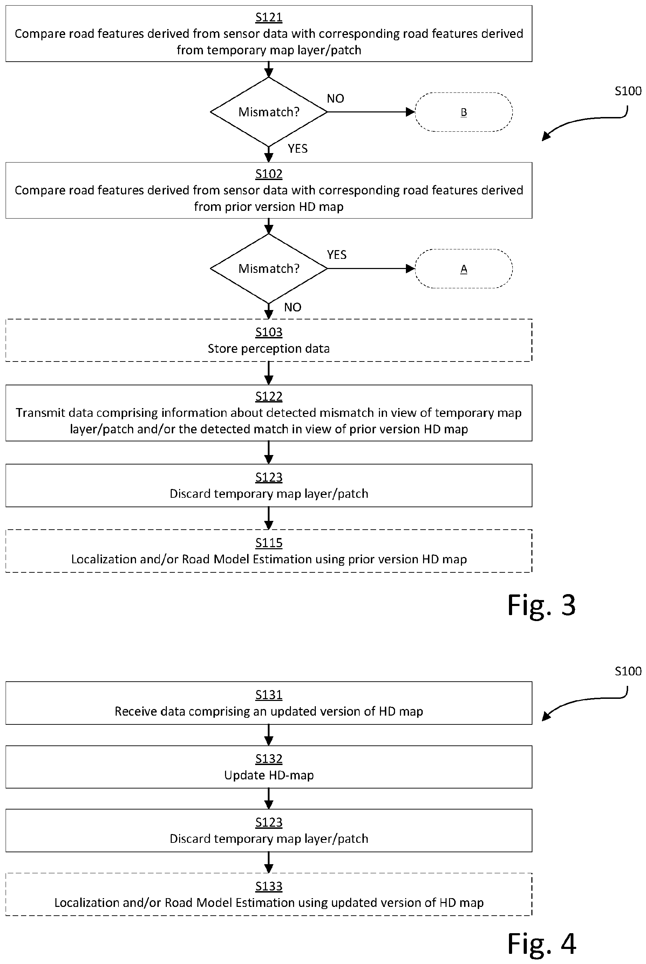

Turning to Fig. 3, the method S100 may further comprise comparing S121 one or more road features derived from sensor data with the corresponding road features derived from the received S111 temporary map layer. Then, in response to detecting a mismatch between one or more road features derived from sensor data and the corresponding one or more road features derived from received Sill temporary map layer, the method S100 may further comprise comparing 102 the one or more road features derived from sensor data and the corresponding one or more road features derived from a prior version of the HD map at the geographical location. In other words, in a situation where the mismatch event was caused by a temporary issue (e.g. temporary road works, or weather conditions), the temporary map layer may be inaccurate once the temporary issue has been remedied or otherwise removed. The method S100 may therefore include a check S121 to see if the original or prior version of the HD map is still valid for that location or area of interest. Here, the "prior version of the HD map" may be understood as a version of the HD map that was used or employed by the ADS prior to receiving Sill the temporary map layer.

Then, in response to detecting a match between the one or more road features derived from sensor data and the corresponding one or more road features derived from the previous version of the HD map at the geographical location associated with the detected mismatch, the method S100 may further comprise transmitting S122, to one or more remote servers, data comprising information about:
- The detected match between the one or more road features derived from sensor data and the corresponding one or more road features derived from the prior version of the HD map. AND/OR
- The detected mismatch between one or more road features derived from sensor data and the corresponding one or more road features derived from received Sill temporary layer/patch.

Further, the method S100 may comprise discarding S123 the temporary map layer. Since the temporary map layer is no longer needed for controlling the vehicle, the data may effectively be discarded to free up data storage space in the vehicle. Moreover, once the temporary map layer has been discarded S122, and the prior version of the HD map has been checked S102 to match with the perceived environment, the prior version of the HD map may be used S115 in order to localize the vehicle or to generate a road model for controlling the vehicle when the vehicle is located in the geographical location associated with the discarded S123 temporary map layer.

However, in some embodiments, the discarding S123 of the temporary map layer may be conditional upon first receiving a confirmation from one or more servers of the mismatch between the temporary map layer and the perceived environment or a confirmation of the match between the prior version of the HD map and the perceived environment before the temporary map layer is discarded S123.

In a scenario where both the temporary map layer and the prior version of the HD map would have demonstrated mismatches in comparison with the perceived environment, the process shown in Fig. 2 may be repeated.

Turning to Fig. 4, the method S100 may further comprise receiving S131, from one or more remote servers, data comprising an updated version of the HD map, and updating S132 the HD map based on the received S131 data. Further, the method S100 may comprise receiving, from one or more remote servers, data indicative of an instruction to discard S123 the received temporary layer associated with the geographical location. Then, in response to updating S132 the HD map and discarding S123 the received temporary layer, the method S100 may further comprise using S133 the updated HD map in order to localize the vehicle or to generate a road model for controlling the vehicle when the vehicle is located in the geographical location associated with the discarded temporary map layer/patch.

Moving to Fig. 5, which is a schematic flowchart representation of the server-side method S200 for supporting localization functions and/or road model estimation functions of a plurality of vehicles 1. Here, each vehicle 1 comprises one or more sensors for monitoring a surrounding environment of the vehicle and an ADS configured to operate within an ODD. The transmitted S104 mismatch events are received S201, monitored and aggregated S202 over time. Accordingly, the server-side method S200 comprises receiving S201 data from a first set of vehicles, where the received data is indicative of a detected mismatch between one or more road features derived from sensor data and the corresponding one or more road features derived from an HD map at a geographical location. The aggregation S202 serves as a hurdle to validate the mismatch event by obtaining a number of independent reports, preferably from a plurality of independent and different vehicles, to reduce the risk of making a falsepositive confirmation (e.g. due to erroneous sensor data from a vehicle 1).

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as generating, deriving, forming, computing, etc. In other words, obtaining a map layer may encompass generating or forming a map layer based on e.g. probe data. Thus, as used herein, "obtaining" may indicate that a parameter is received at a first entity/unit from a second entity/unit, or that the parameter is determined at the first entity/unit e.g. based on data received from another entity/unit.

Further, in response to the received data satisfying one or more trigger conditions, the method S200 comprises transmitting S203, to the plurality of vehicles, data indicative of an ODD exit location for the ODD at the geographical location associated with the detected mismatches and transmitting S206, to the plurality of vehicles, a request for probe data associated with the geographical location associated with the detected mismatch. The trigger condition may comprise the first set of vehicles exceeding some value, the number of reported mismatch events (for a specific geographical location) exceeding some value, a confidence level of the detected mismatches exceeding some value and/or an output from a function dependent on the received S201 data exceeding some value.

In more detail, the method S200 may comprise, in response to the first set of vehicles exceeding a first value N (i.e., the number of reporting vehicles exceeding the first value N) or in response to the number of reported mismatch events (for a specific geographical location) exceeding a value M, the method S200 comprises transmitting S203 data comprising a confirmation of the mismatch event at the specific geographical location to the plurality of vehicles 1 (i.e. to the fleet of ADS-equipped vehicles). In some embodiments, the transmitted S203 confirmation comprises an ODD exit location for the ODD at the geographical location associated with the detected mismatches. Moreover, in response to the first set of vehicles 1 exceeding the first value N or in response to the number of reported mismatch events exceeding a value M, the method S200 further comprises transmitting S206, to the plurality of vehicles, a request for probe data associated with the geographical location associated with the detected mismatch. In the present context, "exceeding a value" may comprise "satisfying a threshold".

The first value may be a predefined value or threshold N. For example, the first value N may be 5 vehicles, 10 vehicles, 15 vehicles or the like. Similarly, if the trigger is that the number of events needs to exceed some value or threshold M, that value (may be referred to as "second value") or threshold M may be a predefined value or threshold M. For example, the mismatch event threshold may be 5 mismatch events, 10 mismatch events, 15 mismatch events or the like. Moreover, both triggers may be used such that the transmission S203 is triggered by the number of vehicles in the first set of vehicles exceeding a first value N or the number of mismatch events exceeding a mismatch event value M. Moreover, the values N and M may be time-dependent, such that they increase with time. For example, 3 mismatch events reported within 5 minutes may trigger the transmission S203, while 3 mismatch events within 12 hours may not trigger the transmission S203. In the latter case, the values N and M may have increased to a number higher than 3 after 1 hour, after 2 hours, after 12 hours, after 24 hours, or the like.

In some embodiments, the trigger for transmission S203 may be dependent on a function of the first value N or a function of the second value M, or a combination of the two (i.e. a function of both variables N and M). In other words, the trigger for transmission S203 need not be solely dependent on a number of vehicles in the first set of vehicles or a number of reported mismatch events. Instead, the trigger metric that is being compared to some value or threshold may be in the form of a function f, e.g., trigger metric = f(N, a) or f(M, a) or f(N, M, a), where the variable another parameter or variable (e.g. time, weather conditions, data quality, ADS software version, ADS hardware version, etc.). Naturally, the example functions may comprise more than one added parameter or variable. The "trigger metric" may then be compared to some value or threshold in order to trigger the transmission S203. For example, the function may be defined so that only 50% of the reported mismatch events are "trusted" for older ADS software versions and/or that only 30% of the mismatch events are "trusted" if they are associated with sensor data having a noise factor above some threshold, and so forth. In reference to the first example where only 50% of the reported mismatch events are "trusted" for older ADS software versions, this may be understood as that a reported mismatch event associated with an up-to-date ADS software version is counted as 1 mismatch event whereas a reported mismatch event associated with an older ADS software version is counted as 0,5.

As mentioned, in some embodiments the received S201 data comprises probability values or confidence levels associated with the detected mismatch(es). Thus, the trigger for the transmission S204 may be based on a probabilistic/statistical function of the received S201 data. For example, the trigger condition may comprise an exceedance of a confidence level that is computed from a number of observations and their respective confidence in the observations (i.e. confidence level of the detected mismatch(es)). Thereby large changes in the environment may be caught more easily than small changes in an automated manner, since large changes generally carry a larger confidence in the observations. Here, large changes in the environment are assumed to be more critical than small changes in the environment for safe operation of the ADS.

In more detail, the aggregation of the received S201 data on the server-side may for example comprise summing up the log likelihood of the hypothesis that there is a mismatch event for each data point that arrives. Thus, a data point that says the HD map and sensor observations agree would contribute with a negative number, an observation of a small change with respect to the HD map that has a low confidence value associated thereto would contribute with a small positive number, while an observation of a large change with respect to the HD map that has a high confidence value associated thereto would add a large positive number. Using such a scheme for the aggregation, one would reach a set confidence level fast if the vehicles transmit a couple of "confident observations" (typically of a large change), while if the vehicles transmit observations that are less confident, or correlated observations (i.e. two vehicles make the same observations close in time), or mixed observations (some vehicles observe a change and some vehicles do not observe a change) it would take much longer (or maybe not at all) to reach the required aggregated confidence level.

In some embodiments, the method S200 comprises transmitting S205, to a remote server (e.g. of a map providing entity 30), data indicative of the confirmed mismatch. In other words, the fleet management server 20 may be configured to notify the map provider server 30 of the mismatch event. Thereby the map providing entity may be made aware of a potential problem with the supplied HD map in a timely manner so that appropriate actions may be taken more quickly.

The method S200 further comprises receiving S207 probe data comprising perception data that comprises information about the surrounding environment associated with the geographical location. In some embodiments, the received S207 probe data comprises object-level data including lane geometry data, lane marker type data, road edge geometry data, road edge type data, traffic sign location data, and/or traffic sign type data. The probe data may further comprise other types of data readily available in an ADS-equipped vehicle such as GNSS output, weather data, etc. In some embodiments, the received S207 probe data is forwarded S208 or otherwise transmitted S208 to the map provider server 30.

Further, the method S200 comprises obtaining S209 a temporary map layer or temporary map patch of the HD map defining a temporary update in the HD map of the geographical location associated with the detected mismatches based on the received probe data. The temporary map layer may be generated or formed by the remote server 20. Alternatively, the temporary map layer may be generated S301 by a map providing entity 30 and provided S302 to the fleet management server 20 by the map providing entity 30. The method S200 further comprises transmitting S210 the obtained S209 temporary map layer to the plurality of vehicles 1.

Further, in some embodiments, in response to receiving a confirmation of receipt of the obtained S209 temporary map layer from a first vehicle of the plurality of vehicles 1, the method S200 comprises transmitting S211 data indicative of an update of the ODD exit location to the first vehicle. In other words, the previously transmitted S204 ODD exit indication is updated centrally in view of the now available temporary map layer.

In some embodiments, in response to receiving S212, from a second set of vehicles of the plurality of vehicles 1, data comprising information about:
- A detected mismatch between one or more road features derived from sensor data and the corresponding one or more road features derived from the temporary map layer/patch for the geographical location. AND/OR
- A detected match between the one or more road features derived from sensor data and the corresponding one or more road features derived from a prior version of the HD map for the geographical location.
and furthermore, in response to the second set of vehicles exceeding a second value K, transmitting S213 data indicative of an instruction to discard the temporary map layer and to use the prior version of the HD map for the geographical location.

The second value K may be a predefined value or threshold K. For example, the second value may be 5 vehicles, 10 vehicles, 15 vehicles or the like. Similarly, as before, the transmission S213 of the "discard instructions" may be triggered by the number of reported mismatch events (in view of the temporary map layer) or match events (in view of the prior version of the HD map) exceeding some value or threshold L. The value or threshold L may be a predefined value L. For example, the value or threshold L may be 10 events, 15 events or 20 events.

As before, the transmission S213 of data indicative of an instruction to discard the temporary map layer and to use the prior version of the HD map layer may be based on a trigger condition, where three examples of trigger conditions (second set of vehicles exceeding a value, a number of mismatch events, or a number of match events) are given above. However, as readily understood by the skilled artisan, the trigger condition for the transmission S213 may be dependent on a function of the value K or a function of the value L, or a combination of the two (i.e. a function of both variables K and L). Moreover, in some embodiments the received S212 data comprises probability values or confidence levels associated with the detected mismatch(es) or the detected match(es). Thus, the trigger for the transmission S213 may be based on a probabilistic/statistical function of the received S212 data. For example, the trigger condition may comprise an exceedance of a confidence level that is computed from a number of observations and their respective confidence in the observations (i.e. confidence level of the detected mismatch(es)).

Executable instructions for performing these functions are, optionally, included in a non-transitory computer-readable storage medium or other computer program product configured for execution by one or more processors.

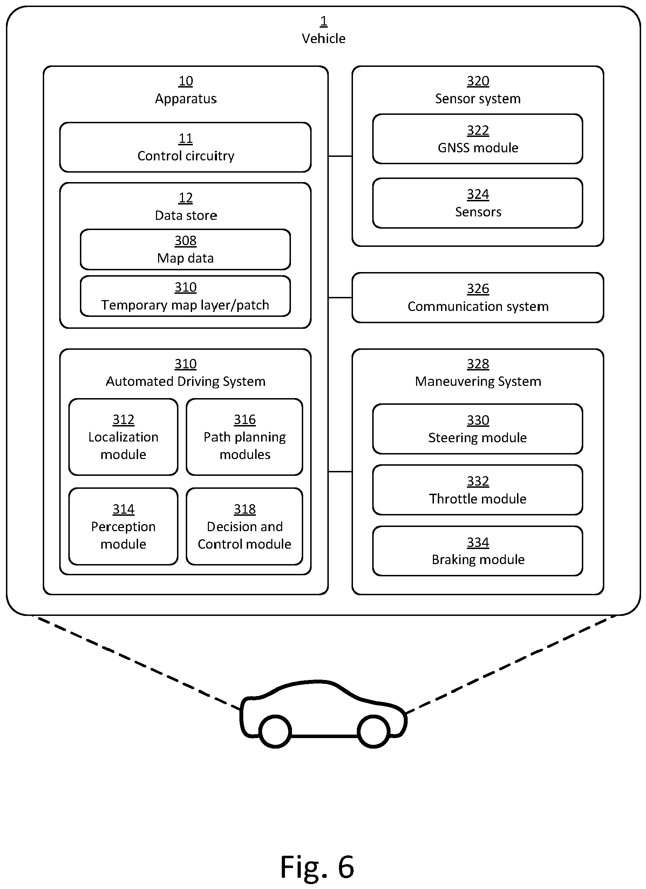

Fig. 6 is a schematic illustration of an ADS-equipped vehicle 1 comprising an apparatus 10 in accordance with some embodiments. As used herein, a "vehicle" is any form of motorized transport. For example, the vehicle 1 may be any road vehicle such as a car (as illustrated herein), a motorcycle, a (cargo) truck, a bus, etc.

The apparatus 10 comprises control circuitry 11 and a memory or datastore 12. The control circuitry 11 may physically comprise one single circuitry device. Alternatively, the control circuitry 11 may be distributed over several circuitry devices. As an example, the apparatus 10 may share its control circuitry 11 with other parts of the vehicle 1 (e.g. the ADS 310). Moreover, the apparatus 10 may form a part of the ADS 310, i.e. the apparatus 10 may be implemented as a module or feature of the ADS or any subcomponents thereof. The control circuitry 11 may comprise one or more processors, such as a central processing unit (CPU), microcontroller, or microprocessor. The one or more processors may be configured to execute program code stored in the memory 12, in order to carry out various functions and operations of the vehicle 1 in addition to the methods S100 disclosed herein. The processor(s) may be or include any number of hardware components for conducting data or signal processing or for executing computer code stored in the memory 12. The memory 12 optionally includes high-speed random access memory, such as DRAM, SRAM, DDR RAM, or other random access solid-state memory devices; and optionally includes non-volatile memory, such as one or more magnetic disk storage devices, optical disk storage devices, flash memory devices, or other non-volatile solid-state storage devices. The memory 12 may include database components, object code components, script components, or any other type of information structure for supporting the various activities of the present description.

In the illustrated example, the memory 12 further stores map data 308. The map data 308 may for instance be used by the ADS 310 of the vehicle 1 in order to perform autonomous functions of the vehicle 1. The map data 308 may comprise high-definition (HD) map data. It is contemplated that the memory 12, even though illustrated as a separate element from the ADS 310, may be provided as an integral element of the ADS 310. In other words, according to an exemplary embodiment, any distributed or local memory device may be utilized in the realization of the herein disclosed technology. Similarly, the control circuitry 11 may be distributed e.g. such that one or more processors of the control circuitry 11 is provided as integral elements of the ADS 310 or any other system of the vehicle 1. In other words, according to some embodiments, any distributed or local control circuitry device may be utilized in the realization of the presently disclosed technology. The ADS 310 is configured carry out the functions and operations of the autonomous or semi-autonomous functions of the vehicle 1. The ADS 310 can comprise a number of modules, where each module is tasked with different functions of the ADS 310.

The vehicle 1 comprises a number of elements which can be commonly found in autonomous or semi-autonomous vehicles. It will be understood that the vehicle 1 can have any combination of the various elements shown in Fig. 6. Moreover, the vehicle 1 may comprise further elements than those shown in Fig. 6. While the various elements is herein shown as located inside the vehicle 1, one or more of the elements can be located externally to the vehicle 1. For example, the map data may be stored in a remote server and accessed by the various components of the vehicle 1 via the communication system 326. Further, even though the various elements are herein depicted in a certain arrangement, the various elements may also be implemented in different arrangements, as readily understood by the skilled person. It should be further noted that the various elements may be communicatively connected to each other in any suitable way. The vehicle 1 of Fig. 6 should be seen merely as an illustrative example, as the elements of the vehicle 1 can be realized in several different ways.

The vehicle 1 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 1. The sensor system 320 may further comprise one or more sensors 324. The sensor(s) 324 may be any type of on-board sensors, such as cameras, LIDARs and RADARs, ultrasonic sensors, gyroscopes, accelerometers, odometers etc. It should be appreciated that the sensor system 320 may also provide the possibility to acquire sensory data directly or via dedicated sensor control circuitry in the vehicle 1.

The vehicle 1 further comprises a communication system 326. The communication system 326 is configured to communicate with external units, such as other vehicles (i.e. via vehicle-to-vehicle (V2V) communication protocols), remote servers (e.g. cloud servers), databases or other external devices, i.e. vehicle-to-infrastructure (V2I) or vehicle-to-everything (V2X) communication protocols. The communication system 318 may communicate using one or more communication technologies. The communication system 318 may comprise one or more antennas (not shown). Cellular communication technologies may be used for long range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short range communication technologies may be used such as Wireless Local Area (LAN), e.g. IEEE 802.11 based solutions, for communicating with other vehicles in the vicinity of the vehicle 1 or with local infrastructure elements. ETSI is working on cellular standards for vehicle communication and for instance 5G is considered as a suitable solution due to the low latency and efficient handling of high bandwidths and communication channels.

The communication system 326 may accordingly provide the possibility to send output to a remote location (e.g. remote operator or control center) and/or to receive input from a remote location by means of the one or more antennas. Moreover, the communication system 326 may be further configured to allow the various elements of the vehicle 1 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 1 further comprises a maneuvering system 320. The maneuvering system 328 is configured to control the maneuvering of the vehicle 1. The maneuvering system 328 comprises a steering module 330 configured to control the heading of the vehicle 1. The maneuvering system 328 further comprises a throttle module 332 configured to control actuation of the throttle of the vehicle 1. The maneuvering system 328 further comprises a braking module 334 configured to control actuation of the brakes of the vehicle 1. The various modules of the maneuvering system 328 may also receive manual input from a driver of the vehicle 1 (i.e. from a steering wheel, a gas pedal and a brake pedal respectively). However, the maneuvering system 328 may be communicatively connected to the ADS 310 of the vehicle, to receive instructions on how the various modules of the maneuvering system 328 should act. Thus, the ADS 310 can control the maneuvering of the vehicle 1, for example via the decision and control module 318.

The ADS 310 may comprise a localization module 312 or localization block/system. The localization module 312 is configured to determine and/or monitor a geographical position and heading of the vehicle 1, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system 314. The perception module 314 may refer to any commonly known module and/or functionality, e.g. comprised in one or more electronic control modules and/or nodes of the vehicle 1, adapted and/or configured to interpret sensory data - relevant for driving of the vehicle 1 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320.

The localization module 312 and/or the perception module 314 may be communicatively connected to the sensor system 320 in order to receive sensory data from the sensor system 320. The localization module 312 and/or the perception module 314 may further transmit control instructions to the sensor system 320.

In more detail, the ADS 310 is configured to operate within an ODD. The control circuitry 11 is configured to, in response to detecting a mismatch between one or more road features derived from sensor data and the corresponding one or more road features derived from a HD map at a geographical location, transmit data indicative of the detected mismatch to one or more remote servers. The transmitted data indicative of the detected mismatch may further comprise "meta data" including one or more geographical coordinates of the geographical location, a time stamp of the detected mismatch, one or more vehicle state parameters, sensor calibration data, software version, and/or one or more sensor snapshots of the surrounding environment at the geographical location.

Furthermore, in response to receiving data indicative of a confirmation of the detected mismatch from one or more remote servers, control circuitry 11 is configured to configure an ODD exit location for the ODD based on the geographical location associated with the detected mismatch.

The control circuitry 11 is further configured to receive, from one or more remote servers, data comprising a temporary map layer 310 of the HD map defining a temporary update in the HD map of the geographical location associated with the detected mismatch. The temporary map layer 310 may be locally stored in a suitable datastore 12 or it may be accessed from a remote storage and the data may be "streamed" to the vehicle 1.

Furthermore, once the temporary map layer 310 is available, the control circuitry 11 is configured to update the configured ODD exit location for the ODD and use the received temporary map layer 310 in order to localize the vehicle 1 or to generate a road model for controlling the vehicle 1 when the vehicle 1 is located in the geographical location associated with the received temporary map layer 310.

In some embodiments, the control circuitry 11 is configured to store perception data comprising information about the environment associated with the geographical location (related to the detected mismatch event). The perception data may for example be an output (intermediate or final) from the perception system 314 of the ADS 310. The stored perception data may comprise object-level data including lane geometry data, lane marker type data, road edge geometry data, road edge type data, traffic sign location data, and/or traffic sign type data. The control circuitry 11 may be further configured to receive, from one or more remote servers, a request to transmit probe data associated with the geographical location related to the detected mismatch. Moreover, the control circuitry 11 may be configured to transmit the stored perception data to one or more remote servers in response to receiving the request to transmit probe data.

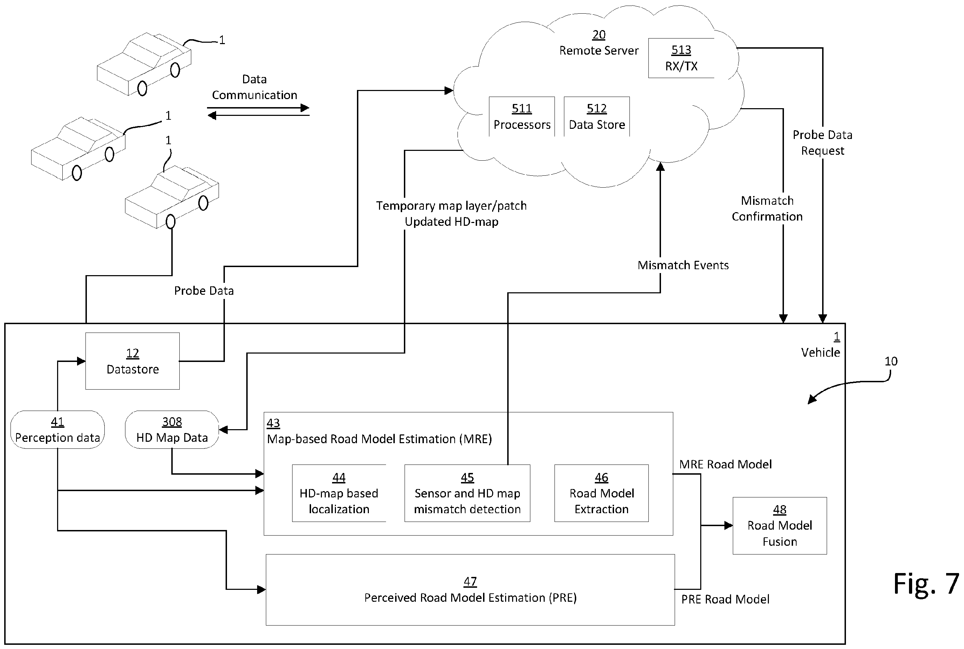

Fig. 7 is a schematic block diagram representation of system employing the technologies disclosed herein. In more detail, Fig. 7 illustrates a vehicle 1 comprising an apparatus 10 for ODD management in accordance with some embodiments, and a server-system 20 for supporting localization functions and/or road model estimation functions of a plurality of vehicles 1 in accordance with some embodiments. Each vehicle 1 of the plurality of vehicles 1 is capable of transmitting and receiving data to and from the remote server 20, and vice versa.

In more detail, the server 20 comprises control circuitry 511 and a memory or datastore 512. The control circuitry 511 may physically comprise one single circuitry device. Alternatively, the control circuitry 511 may be distributed over several circuitry devices. The control circuitry 511 may comprise one or more processors, such as a central processing unit (CPU), microcontroller, or microprocessor. The one or more processors may be configured to execute program code stored in the memory 512, in order to carry out various functions and operations of the server 20 in addition to the methods S200 disclosed herein. The processor(s) may be or include any number of hardware components for conducting data or signal processing or for executing computer code stored in the memory 512. The memory 512 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 512 may include database components, object code components, script components, or any other type of information structure for supporting the various activities of the present description. The processes or functions executed by the server 20 as disclosed herein may be distributed across a plurality of servers, in a so-called cloud environment.

The server 20 further comprises suitable communication means 513 for transmitting and receiving data to and from one or more remote vehicles 1. The communication means 513 may for example include one or more transmission (TX) and reception (RX) modules, and/or one or more transceiver (TRX) modules as known in the art. The server 20 may for example be arranged to communicate with the fleet of vehicles 1 via a wireless communication network using readily available communication standards.

Accordingly, the control circuitry 511 is configured to receive data from a first set of vehicles of the plurality of vehicles 1. Here, the received data is indicative of a detected mismatch between one or more road features derived from sensor data and the corresponding one or more road features derived from a HD map at a geographical location. Then, in in response to the received data satisfying one or more trigger conditions, the control circuitry 511 is configured to transmit, to the plurality of vehicles 1, data indicative of an ODD exit location for the ODD for the geographical location associated with the detected mismatches and to transmit, to the plurality of vehicles 1, a request for probe data associated with the geographical location associated with the detected mismatch. The control circuitry 511 is further configured to receive probe data comprising perception data 41 that comprises information about the environment associated with the geographical location. Furthermore, the control circuitry 511 is configured to obtain a temporary map layer of the HD map defining a temporary update in the HD map of the geographical location associated with the detected mismatches based on the received probe data. The temporary map layer may for example be generated or formed by the server, or received from some external map providing entity. Further, the control circuitry 511 is configured to transmit, to the plurality of vehicles 1, the obtained temporary map layer of the HD map.

Each vehicle 1 in the fleet of vehicles 1 may be equipped with suitable sensors, a map-based road estimation feature 43, and a mismatch detector 45 for detecting disparities between the sensory output 41 and the HD map 308. Moreover, each vehicle 1 may be arranged to consume HD map information 308 (originating either from a local datastore or a remote datastore, such as e.g. a cloudbased HD map distribution) along its route of interest. Moreover, each vehicle 1 may be arranged to transmit sensory output 41 or perception data 41 to the remote server 20 for temporary map layer creation.

The remote server 20 is provided with a "HD map mismatch event aggregator" component that is configured to aggregate mismatch events from several vehicles 1 in areas of interest with the purpose of triggering perception data crowdsourcing in areas where a group of vehicles 1 in the fleet have signalled a mismatch. An area of interest may accordingly be understood as a geographical area for which several vehicles 1 have reported a so-called mismatch event.

Accordingly, Fig. 7 shows an apparatus 10 for a vehicle 1 having one or more sensors for monitoring a surrounding environment of the vehicle 1. Furthermore, the vehicle has an ADS configured to operate within an ODD. In general, Fig. 7 depicts the flow of information through detection of a mismatch event in the vehicle to the transmission and subsequent aggregation at the remote server 20. The apparatus 10 comprises control circuitry configured to perform the functions of the methods disclosed herein, where the functions may be included in a non-transitory computer-readable storage medium or other computer program product configured for execution by the control circuitry. However, in order to exemplify and further elucidate the herein disclosed technology, the control circuitry is represented as various "modules" in Fig. 7, each of them linked to one or more specific functions.

The vehicle 1 comprises Map-based Road Estimation (MRE) component 43 and Perceived Road Estimation (PRE) component 47. As mentioned, the MRE component 43 may be understood as a function configured to estimate a road model by first using HD map based localization 44 to localize the ego-vehicle in the HD map, and then extract 46 the road model based on the ego-vehicle pose and the map elements of the HD map. The MRE component accordingly consumes both perception data 41 and HD map data 308. The PRE component 47, on the other hand, may be understood as a function configured to estimate a road model without using the HD map 308 but mainly relying on real-time perception data 41 (e.g., processed camera output, lidar output, and radar output). The output from both of these road model estimation components 43, 47 may be fused using a road geometry fusion (RGF) algorithm 48. The resulting fused road model may then be used as the final estimated road model.

Since the MRE component 43 consumes both real-time perception data 41 and HD map data 308, it may be advantageous to invoke or implement a mismatch detector functionality 45 therein. The mismatch detector 45 accordingly compares the road features derived from sensor data (i.e. from the "perceived" environment") 41 with the corresponding road features derived from the HD map 308, and if a discrepancy is found, the mismatch detector 45 may trigger the apparatus 10 to report a mismatch event to one or more remote servers 20.

Once enough mismatch events have been reported to the server 20, the server 20 may trigger a crowdsourcing of probe data to construct a temporary map layer to remedy the errors in the current HD map version. Thus, the server 20 may transmit a request for probe data from the fleet of vehicles 1, whereupon the vehicles 1 send their stored perception data that was collected at the area of interest. The server 20 may comprise a component or module that is configured to generate a temporary map layer (including lane marking geometry, lane types, traffic signs, road edges, road barriers, etc.) based on the crowdsourced perception data.

Moreover, it may be advantageous to acquire perception data from a plurality of vehicles 1, i.e. from multiple traverses through the area of interest, as each pass and each vehicle 1 may experience different aspects of the scene. For example, one vehicle may not be able to perceive some part of the road due to blockage from other road users, another vehicle may generate noisy or degenerated perception data due to adverse weather conditions. However, other vehicles passing through the area of interest may then fill these potential gaps. Moreover, the generation of the temporary map layer may comprise aligning the perception data from each vehicle such that each individual set of perception data is brought into a common coordinate frame, or share a common frame of reference. In more detail, the alignment may be performed under the assumption that large parts of the environment in the particular area of interest are stationary (i.e. the area comprises a set of landmarks), and then an adjustment of the trajectories of the different vehicles 1 are done such that the observations of the environment become coherent over time. This alignment process may also be referred to as simultaneous localization and mapping (SLAM).

The landmarks used in the above-referenced alignment process are typically the same landmarks that are of interest to include in a HD map such as e.g. road markings, traffic signs, and traffic lights. However, in addition to these landmarks other landmarks may also be used. For example, one could use general image point features - e.g., Scale-Invariant Feature Transform (SIFT) or other "learned" machinelearning features. These are typically high dimensional and quite descriptive features of the environment to facilitate easier data association between different probing conditions. However, to reach a compact map representation these features may be reduced or even removed from the end result (i.e. temporary map layer).

Furthermore, the server 20 may comprise a component or function that monitors and compares any HD map updates received from a map providing entity in view of the generated temporary map layers. If the updated HD map as received from the map providing entity has incorporated the elements of some temporary map layer(s), that or those temporary map layer may be discarded. Similarly, if the updated HD map as received from the map providing entity has not incorporated the elements of some temporary map layer(s), that or those temporary map layers may still be distributed to the fleet.

The present technology has been presented above with reference to specific embodiments. However, other embodiments than the above described are possible and within the scope of the herein disclosed technology. Different method steps than those described above, performing the method by hardware or software, may be provided within the scope of the herein disclosed technology. Thus, according to some embodiments, there is provided a non-transitory computer-readable storage medium storing one or more programs configured to be executed by one or more processors of a vehicle control system, the one or more programs comprising instructions for performing the method according to any one of the above-discussed embodiments. Alternatively, according some embodiments a cloud computing system can be configured to perform any of the methods presented herein. The cloud computing system may comprise distributed cloud computing resources that jointly perform the methods presented herein under control of one or more computer program products.

Accordingly, it should be understood that parts of the described solution may be implemented either in the vehicle 1, in a system located external the vehicle 1, or in a combination of internal and external the vehicle; for instance in a server in communication with the vehicle, a so called cloud solution. The different features and steps of the embodiments may be combined in other combinations than those described.

It should be noted that any reference signs do not limit the scope of the claims, that the invention may be at least in part implemented by means of both hardware and software, and that several "means" or "units" may be represented by the same item of hardware.

Although the figures may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various receiving steps, transmitting steps, detecting steps, updating steps and configuring steps. The above mentioned and described embodiments are only given as examples and should not be limiting to the present invention. Other solutions, uses, objectives, and functions within the scope of the invention as claimed in the below described patent claims should be apparent for the person skilled in the art.

## Claims

1. A computer-implemented method (S100) for a vehicle comprising one or more sensors for monitoring a surrounding environment of the vehicle and an Automated Driving System, ADS, configured to operate within an Operational Design Domain, ODD, the method comprising:
in response to detecting a mismatch between one or more road features derived from sensor data and the corresponding one or more road features derived from a High Definition, HD, map at a geographical location, transmitting (S104) data indicative of the detected mismatch to one or more remote servers;
in response to receiving data indicative of a confirmation of the detected mismatch from one or more remote servers, configuring (S106) an ODD exit location for the ODD for the geographical location associated with the detected mismatch;
receiving (S111), from one or more remote servers, data comprising a temporary map layer of the HD map defining a temporary update in the HD map of the geographical location associated with the detected mismatch;
updating (S112) the configured ODD exit location for the ODD; and
using (S113) the received temporary map layer in order to localize the vehicle and/or to generate a road model for controlling the vehicle when the vehicle is located at the geographical location associated with the received temporary map layer.

2. The method (S100) according to claim 1, further comprising:
storing (S103) perception data comprising information about the environment associated with the geographical location;
receiving (S109), from one or more remote servers, a request to transmit probe data associated with the geographical location associated with the detected mismatch;
in response to receiving the request to transmit probe data, transmitting (S110) the stored perception data to one or more remote servers.

3. The method (S100) according to claim 2, wherein the stored perception data comprises object-level data including lane geometry data, lane marker type data, road edge geometry data, road edge type data, traffic sign location data, and/or traffic sign type data.

4. The method (S100) according to any one of the preceding claims, wherein the transmitted data indicative of the detected mismatch further comprises meta data including one or more geographical coordinates of the geographical location, a time stamp of the detected mismatch, one or more vehicle state parameters, sensor calibration data, software version, HD map version, and/or one or more sensor snapshots of the surrounding environment at the geographical location.

5. The method (S100) according to any one of the preceding claims, further comprising:
in response to detecting a mismatch between one or more road features derived from sensor data and the corresponding one or more road features derived from received temporary map layer at the geographical location associated with the detected mismatch:
comparing (S102) the one or more road features derived from sensor data and the corresponding one or more road features derived from a prior version of the HD map at the geographical location, wherein the prior version of the HD map is a version of the HD map used prior to receiving the temporary layer;
in response to detecting a match between the one or more road features derived from sensor data and the corresponding one or more road features derived from the previous version of the HD map at the geographical location associated with the detected mismatch:
transmitting (S122), to one or more remote servers, data comprising information about:
the detected match between the one or more road features derived from sensor data and the corresponding one or more road features derived from the prior version of the HD map, and/or
the detected mismatch between one or more road features derived from sensor data and the corresponding one or more road features derived from received temporary layer;
discarding (S123) the received temporary map layer associated with the geographical location.

6. The method (S100) according to claim 5, further comprising:
in response to discarding the received temporary layer:
using (S115) the prior version of the HD map in order to localize the vehicle or to generate a road model for controlling the vehicle when the vehicle is located in the geographical location associated with the discarded temporary map layer.

7. The method (S100) according to any one of claims 1-4, wherein the vehicle comprises one or more memory devices having stored thereon the HD map, the method (S100) further comprising:
receiving (S131), from one or more remote servers, data comprising an updated version of the HD map;
updating (S132) the HD map based on the received data;
receiving, from one or more remote servers, data indicative of an instruction to discard the received temporary layer associated with the geographical location;
in response to updating the HD map and discarding the received temporary layer:
using (S133) the updated HD map in order to localize the vehicle or to generate a road model for controlling the vehicle when the vehicle is located in the geographical location associated with the discarded temporary map layer.

8. The method (S100) according to any one of the preceding claims, wherein the ADS is configured to generate a road model of a surrounding environment of the vehicle based on a fusion of an HD map-based road model and a perception-based road model, the method further comprising:
in response to detecting the mismatch between one or more road features derived from sensor data and the corresponding one or more road features derived from the High Definition, HD, map at the geographical location and before receiving the temporary map layer:
down-weighing (S107) the HD map-based road model of the fusion and/or up-weighing (S107) the perception-based road model of the fusion for a generated road model of the surrounding environment at the geographical location.

9. A computer program product comprising instructions which, when the program is executed by a computing device of a vehicle, causes the computing device to carry out the method (S100) according to any one of claims 1-8.

10. A computer-readable storage medium comprising instructions which, when executed by a computing device of a vehicle, causes the computing device to carry out the method (S100) according to any one of claims 1-8.

11. An apparatus (10) for a vehicle comprising one or more sensors (324) for monitoring a surrounding environment of the vehicle (1), wherein the vehicle comprises an Automated Driving System, ADS, (310) configured to operate within an Operational Design Domain, ODD, the apparatus comprising one or more processors (11) configured to:
in response to detecting a mismatch between one or more road features derived from sensor data (41) and the corresponding one or more road features derived from a High Definition, HD, map (308) at a geographical location, transmit data indicative of the detected mismatch to one or more remote servers (20);
in response to receiving data indicative of a confirmation of the detected mismatch from one or more remote servers (20), configure an ODD exit location for the ODD based on the geographical location associated with the detected mismatch;
receive, from one or more remote servers (20), data comprising a temporary map layer (310) of the HD map defining a temporary update in the HD map of the geographical location associated with the detected mismatch;
update the configured ODD exit location for the ODD;
use the received temporary map layer in order to localize the vehicle or to generate a road model for controlling the vehicle when the vehicle is located in the geographical location associated with the received temporary map layer (310).

12. A vehicle (1) comprising:
one or more sensors (324) for monitoring a surrounding environment of the vehicle;
an Automated Driving System, ADS, (310) configured to operate within an Operational Design Domain, ODD;
an apparatus (10) according to claim 11.

13. A computer-implemented method (S200) for a server apparatus in communication with a plurality of vehicles, each vehicle comprising one or more sensors for monitoring a surrounding environment of the vehicle and an Automated Driving System, ADS, configured to operate within an Operational Design Domain, ODD, the method comprising:
receiving (S201) data from a first set of vehicles of the plurality of vehicles, the received data being indicative of a detected mismatch between one or more road features derived from sensor data and the corresponding one or more road features derived from a High Definition, HD, map at a geographical location;
in response to the received (S201) data satisfying one or more trigger conditions:
transmitting (S203), to the plurality of vehicles, data indicative of an ODD exit location for the ODD at the geographical location associated with the detected mismatches, and
transmitting (S206), to the plurality of vehicles, a request for probe data associated with the geographical location associated with the detected mismatch;
receiving (S207) probe data comprising perception data comprising information about the environment associated with the geographical location;
obtaining (S209) a temporary map layer of the HD map defining a temporary update in the HD map of the geographical location associated with the detected mismatches based on the received probe data; and
transmitting (S210), to the plurality of vehicles, the obtained temporary map layer of the HD map.

14. A computer program product comprising instructions which, when the program is executed by a computing device of a vehicle, causes the computing device to carry out the method (S200) according to claim 13.

15. A system for a server apparatus (20) in communication with a plurality of vehicles (1), each vehicle comprising one or more sensors (324) for monitoring a surrounding environment of the vehicle, an Automated Driving System, ADS, (310) configured to operate within an Operational Design Domain, ODD, the system comprising control circuitry (511) configured to:
receive data from a first set of vehicles of the plurality of vehicles (1), the received data being indicative of a detected mismatch between one or more road features derived from sensor data and the corresponding one or more road features derived from a High Definition, HD, map at a geographical location;
in response to the received data satisfying one or more trigger conditions:
transmit, to the plurality of vehicles (1), data indicative of an ODD exit location for the ODD for the geographical location associated with the detected mismatches, and
transmit, to the plurality of vehicles (1), a request for probe data associated with the geographical location associated with the detected mismatch;
receive probe data comprising perception data (41) comprising information about the environment associated with the geographical location;
obtain a temporary map layer of the HD map defining a temporary update in the HD map of the geographical location associated with the detected mismatches based on the received probe data; and
transmit, to the plurality of vehicles (1), the obtained temporary map layer of the HD map.
